# FASCICULE DE BREVET EUROPEEN

(11) **EP 0 875 973 B1**
(45) Date de publication et mention de la délivrance du brevet: **10.07.2002**
(21) Numéro de dépôt: 98401026.4
(22) Date de dépôt: 27.04.1998
(51) Int. Cl.: H02B 13/065, G01M 3/32, H01H 33/56

(54) **Méthode pour surveiller un taux de fuite d'une enveloppe d'appareillage électrique à haute tension**
Verfahren zur Leckratenüberwachung der Verkapselung einer Hochspannungsapparatur
Method for monitoring a leak rate in encapsulated high voltage equipment

(30) Priorité: 30.04.1997 FR 9705360
(43) Date de publication de la demande: 04.11.1998
(73) Titulaire: GEC ALSTHOM T ET D SA, 75016 Paris (FR)
(72) Inventeur: Marmonier, Jean, 73100 Aix Les Bains (FR); Penning, Jean-François, 73100 Aix Les Bains (FR)
(74) Mandataire: Gosse, Michel

(56) Documents cités:
- EP-A- 0 637 114
- EP-A- 0 726 630
- JP-A- 8 273 939
- US-A- 5 502 435
- PATENT ABSTRACTS OF JAPAN vol. 013, no. 378 (E-809), 22 août 1989 & JP 01 129702 A (MITSUBISHI ELECTRIC CORP), 23 mai 1989,

## Description

L'invention concerne une méthode pour surveiller un taux de fuite d'une enveloppe d'appareillage électrique à haute tension contenant un gaz sous pression.

L'invention s'applique plus particulièrement à la surveillance d'un taux de fuite de gaz diélectrique comme l'hexafluorure de soufre SF₆ contenu dans une enveloppe assurant un blindage électrique d'un appareillage à haute tension, par exemple un disjoncteur sous une pression comprise entre quelques unités et 10 bars.

De manière connue, le taux de fuite est calculé à partir de la densité du gaz contenu dans l'enveloppe, la densité étant elle-même déterminée par un capteur de pression compensée en température. Il faut noter que la compensation peut aussi être réalisée par un capteur de température distinct du capteur de pression. Cependant, un capteur unique apporte une simplification de montage.

Le document EP-A-0637114 décrit une telle méthode. Dans ce document, on effectue périodiquement, au moins une fois par seconde, un enregistrement de la pression et de la température, et on les mémorise temporairement et, dix à seize fois par jour, on traite les valeurs mémorisées et on détermine la densité moyenne du gaz dans chaque tranche de temps de la journée (10 à 16 tranches) puis, une fois par jour, on traite ces valeurs moyennes pour obtenir et mémoriser une valeur moyenne de la densité du gaz à l'issue d'une période d'une journée.

Cette méthode ne permet pas de s'affranchir des sources d'incertitudes sur la détermination de la densité du gaz contenu dans l'enveloppe de l'appareillage électrique.

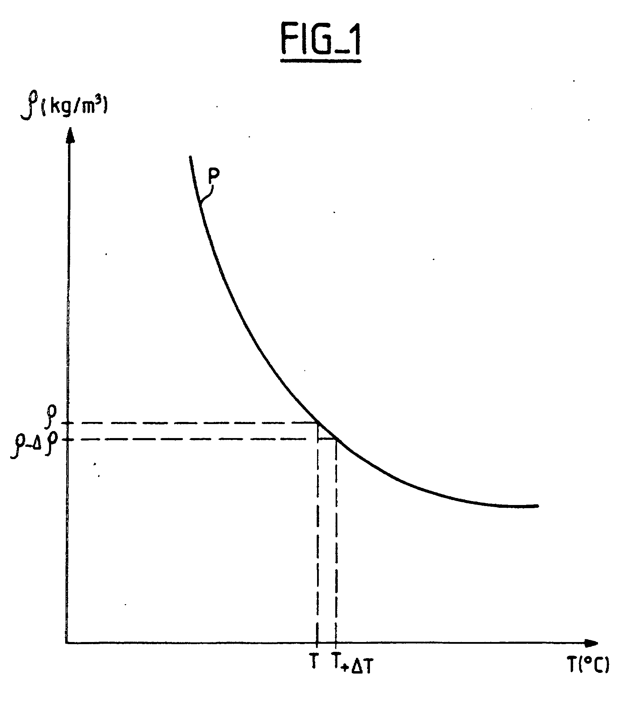

La température mesurée doit être la plus proche possible de la température du gaz. Sur la figure1 est représentée une variation de la densité ρ du gaz en fonction de la température T, pour une pression donnée P. A une température T, le gaz possède une densité ρ. Si le capteur enregistre une température T+ΔT différente de T par une incertitude ΔT positive dans l'exemple de la figure 1, la compensation de la pression P conduit à une densité ρ-Δρ entachée d'une incertitude Δρ négative dans l'exemple de la figure 1.

Pour détecter et suivre dans le temps l'évolution d'une éventuelle fuite de gaz dans l'enveloppe du disjoncteur, l'incertitude de mesure du capteur de densité doit être négligeable devant la diminution de la densité due à la fuite.

Un taux de fuite annuel de l'ordre de 1 % a été pris en compte lors d'essais réalisés sur site. Bien que le capteur utilisé présente une stabilité de mesure de la densité de l'ordre de 0,2 % par an, des écarts de plusieurs pour cent ont été observés entre moyennes journalières de la densité.

Les essais ont montré que l'ensoleillement et l'échauffement de l'appareillage électrique constituent deux sources d'incertitudes importantes dans la détermination de la densité. En fonction du rayonnement solaire et de l'intensité du courant électrique traversant l'appareillage, l'enveloppe est soumise à des variations thermiques journalières. Ces variations engendrent des écarts de température entre le gaz et le détecteur, qui subissent différemment l'influence thermique de l'enveloppe au niveau du conduit de communication formé dans son épaisseur.

Le but de l'invention est donc de proposer une méthode pour surveiller le taux de fuite d'une enveloppe d'appareillage électrique à haute tension à l'aide d'un capteur de pression à compensation en température et intrinsèquement stable, qui soit simple à mettre en oeuvre compte tenu des contraintes imposées par l'enveloppe telles décrites ci-dessus.

L'invention a ainsi pour objet une méthode pour surveiller un taux de fuite d'une enveloppe d'un appareillage électrique à haute tension contenant un gaz sous pression, dans laquelle :
- on effectue une série d'enregistrements de la densité du gaz à intervalles de temps réguliers à l'aide d'un capteur de pression à compensation en température,
- on traite par tranches de temps les enregistrements de la densité du gaz, chaque tranche de temps conduisant à une valeur moyenne de la densité du gaz,
- on traite les valeurs moyennes obtenues à l'issue de chaque tranche de temps pour donner une valeur moyenne de la densité du gaz à l'issue d'une période de tranches de temps,
caractérisée en ce que le capteur de pression à compensation de température est fixé sur l'enveloppe par l'extérieur et communique avec le gaz par l'intermédiaire d'un conduit formé dans l'épaisseur de l'enveloppe et en ce que :
- ladite série d'enregistrements de la densité du gaz est effectuée pendant une période nocturne,
- lesdites tranches de temps sont des tranches horaires de ladite période nocturne,
- ladite période de tranches de temps correspond à la période nocturne au cours de laquelle est effectuée ladite série d'enregistrements de la densité du gaz,
- on détermine un taux de fuite de l'enveloppe par différence entre densités moyennes obtenues à l'issue de deux périodes nocturnes différentes.

Des enregistrements nocturnes de pression et de température permettent en effet de s'affranchir en grande partie des sources d'incertitude sur la détermination de la densité. En outre, le capteur de pression compensée en température doit être fixé sur la paroi externe de l'enveloppe pour prévenir le risque d'arc électrique entre l'enveloppe et le disjoncteur sous l'effet de la haute tension, et il comprend un détecteur de pression et un détecteur de température qui communiquent, comme il vient d'être dit, avec le gaz par l'intermédiaire d'un conduit formé dans l'épaisseur de l'enveloppe.

Dans un mode particulier de réalisation de l'invention, la période nocturne s'étend de 0 heure à 4 heures du matin. Au cours de cette période, l'enveloppe subit peu de variations thermiques, la température extérieure du site d'installation du disjoncteur et de l'enveloppe étant stable, notamment du fait de l'absence de rayonnement solaire, de même que l'intensité du courant traversé par le disjoncteur.

D'autres caractéristiques et avantages de l'invention apparaîtront à la lecture de la description d'un mode de réalisation illustré par les figures 1 à 6.

La figure 1 montre une courbe d'évolution de la densité du gaz contenu dans l'enveloppe en fonction de la température et pour une pression donnée.

La figure 2 montre l'enveloppe de l'appareillage électrique à haute tension en coupe transversale.

La figure 3 montre plus précisément le capteur de densité fixé sur la paroi externe de l'enveloppe.

La figure 4 illustre une variation vue par le capteur de la densité du gaz contenu dans l'enveloppe en fonction de l'intensité de courant électrique traversant l'appareillage électrique à haute tension.

La figure 5 illustre une variation vue par le capteur de la densité du gaz contenu dans l'enveloppe en fonction de la température extérieure du site d'installation.

La figure 6 illustre sous forme d'un schéma-bloc un mode d'acquisition et de traitements des enregistrements de pression et de température pour surveiller un taux de fuite d'un disjoncteur.

L'invention a pour objet une méthode pour surveiller un taux de fuite dans une enveloppe d'appareillage électrique à haute tension.

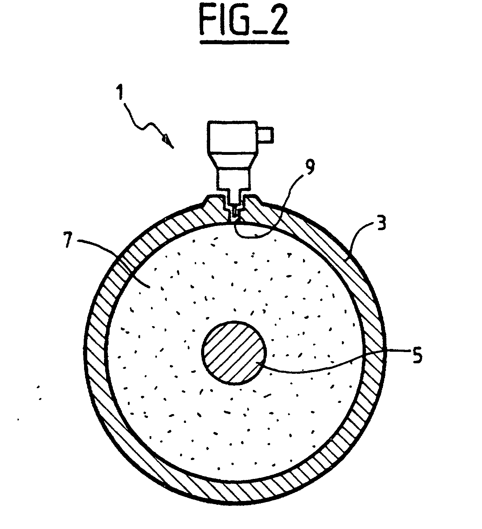

Figure 2, une enveloppe 3 métallique de forme tubulaire est représentée en coupe transversale montrant un disjoncteur schématisé par un plein 5. L'enveloppe est fermée et contient un gaz diélectrique 7, par exemple l'hexafluorure de Soufre SF₆, ou l'Azote N₂. A titre d'exemple, la densité du gaz est comprise entre 23 grammes par litre (g/l) et 50 g/l, correspondant respectivement à une pression comprise entre 4,5 bars et 8 bars.

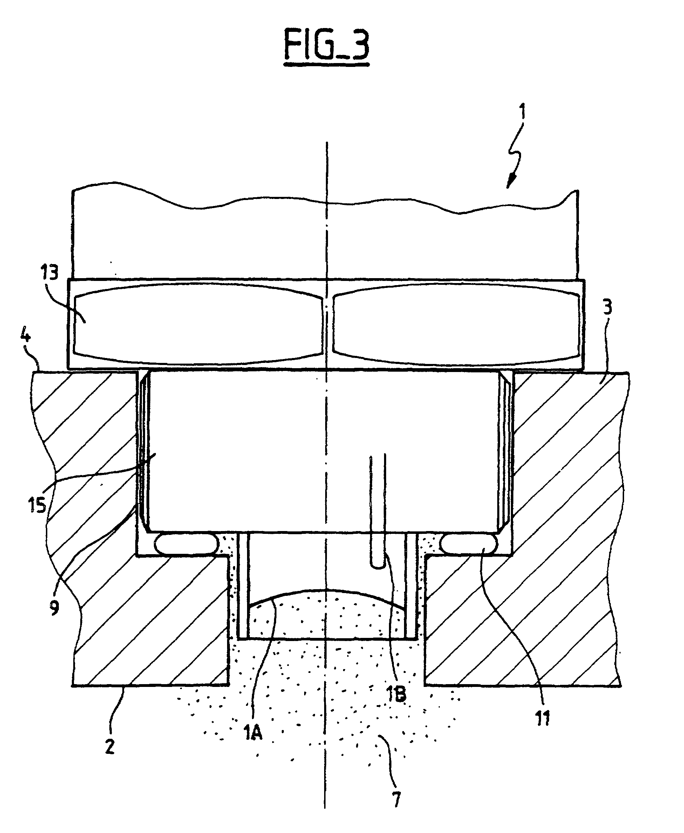

L'invention met en oeuvre un capteur comprenant un détecteur de pression et un détecteur de température. Sur la figure 3, un capteur 1 est fixé sur la paroi externe 4 de l'enveloppe L'étanchéité est assurée par un joint 11. Un conduit 9 est usiné avec un filetage dans l'épaisseur de l'enveloppe 3 dans lequel une bague de fixation 15 du capteur vient se visser. Un contre-écrou 13 assure la fixation du capteur 1 sur la paroi externe 4 de l'enveloppe

Le capteur comprend un détecteur de pression 1A constitué par exemple d'une membrane élastique, et un détecteur de température 1B constitué par exemple d'une résistance de Platine Les deux détecteurs sont mis en communication avec le gaz 7 par l'intermédiaire du conduit 9 Ils ne font pas saillie par rapport à la paroi interne de l'enveloppe 2, qui est finement polie

Le capteur détermine la densité du gaz à partir de la pression compensée par la température. Le gaz 7 contenu dans le conduit 9 et le détecteur de température 1B sont influencés par les variations thermiques locales de l'enveloppe 3. Au cours d'une journée, la température de l'enveloppe varie en fonction du rayonnement solaire et de l'intensité du courant traversant le disjoncteur.

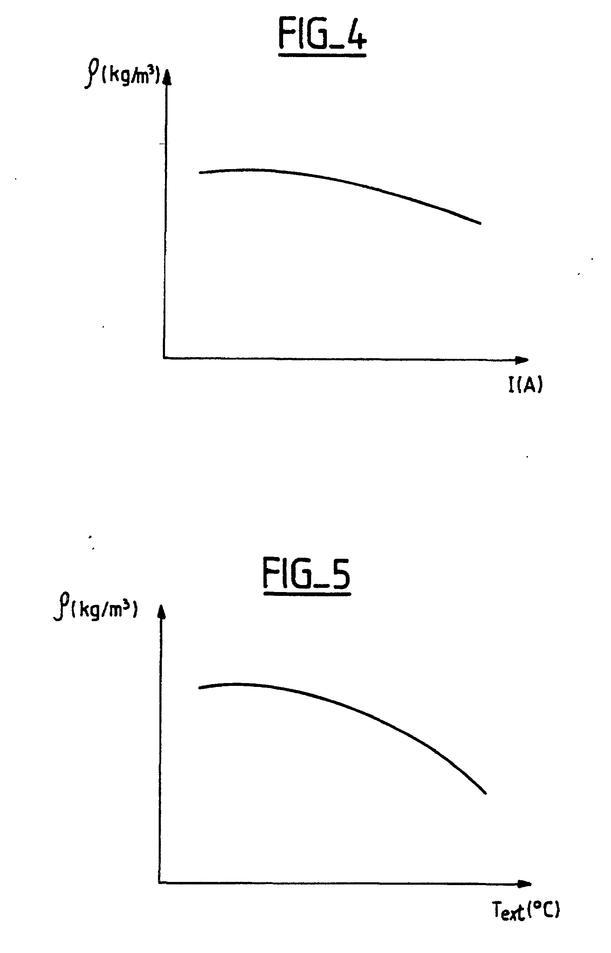

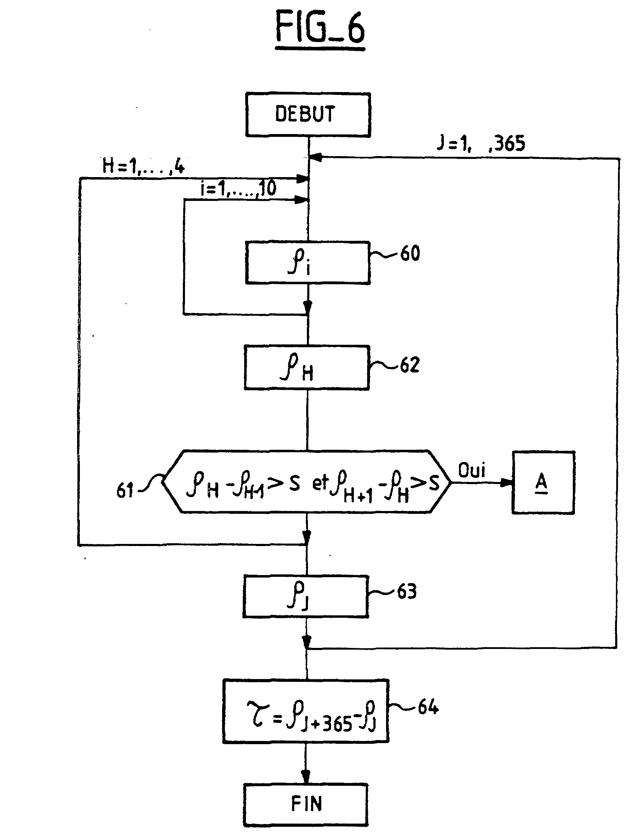

Sur la figure 4, la variation de la densité ρ est rapportée en fonction de l'intensité I du courant traversant le disjoncteur, pour une température extérieure Tₑₓₜ du site d'installation du disjoncteur constante. Cette variation est vue par le capteur alors que la densité réelle est constante. De même, sur la figure 5, la variation de la densité ρ est rapportée en fonction de la température extérieure Tₑₓₜ pour une intensité I de courant traversant le disjoncteur constante. cette variation étant vue par le capteur alors que la densité réelle est constante.

Ces deux figures illustrent le résultat expérimental selon lequel la densité ρ vue par le capteur est sensiblement constante lorsque à la fois l'intensité I et la température extérieure Tₑₓₜ sont faibles.

La méthode selon l'invention tire avantageusement parti de ces expériences en effectuant des enregistrements de pression et de température en période nocturne, de préférence entre 0 heure et 4 heures du matin. Cette période est celle pour laquelle à la fois l'intensité du courant I et la température extérieure Tₑₓₜ sont faibles, la demande sur la ligne électrique étant réduite et sensiblement constante, et le rayonnement solaire nul.

Détecter un taux de fuite τ annuel de l'ordre de 1% nécessiterait une précision de mesure instantanée du capteur bien supérieure à celle que présentent la plupart des capteurs disponibles dans le commerce. Pour cette raison, la pression P et la température T ne sont pas acquises en temps réel, mais à intervalles de temps réguliers. Dans l'exemple de la figure 6, bloc 60, une valeur ρᵢ de la densité du gaz est enregistrée toutes les six minutes pendant une période nocturne qui s'étend de 0 heure à 4 heures du matin.

Les enregistrements acquis pendant la période nocturne sont traités par tranches horaires, chaque tranche horaire conduisant à une valeur moyenne ρ_{H} de la densité du gaz. Figure 6, la période nocturne est divisée en quatre heures, chacune conduisant, bloc 62, à une valeur moyenne horaire ρ_{H} calculée à partir des dix enregistrements successifs acquis au cours de chaque heure, puis stockée en mémoire.

Les valeurs moyennes par tranches horaires sont ensuite traitées pour donner une valeur moyenne ρ_{J} de la densité du gaz à l'issue de la période nocturne. Dans l'exemple de la figure 6, bloc 63, une valeur moyenne journalière ρ_{J} est calculée à partir des quatre valeurs moyennes horaires ρ_{H} puis stockée en mémoire.

Le taux de fuite τ du disjoncteur est déterminé par différence entre densités moyennes obtenues à l'issue de deux périodes nocturnes différentes. Dans l'exemple de la figure 6, bloc 64, un taux de fuite annuel τ est calculé par différence entre les densités moyennes ρ_{J} et ρ_{J+365} de deux périodes nocturnes séparées entre elles d'une année.

Si à deux reprises successives au cours d'une période nocturne, une variation entre densités moyennes ρ_{H} obtenues à l'issue de deux tranches horaires successives, excède un seuil S de taux de fuite, et à condition que le dépassement du seuil intervienne avant un délai minimal de calcul du taux de fuite τ, une alarme horaire est générée par un dispositif d'alarme.

Dans l'exemple de la figure 6, bloc 61, une alarme générée par un dispositif d'alarme A est déclenchée si une première variation entre les densités horaires ρ_{H-1} et ρ_{H}. puis une deuxième variation entre les densités horaires ρ_{H} et ρ_{H+1} excédent un seuil S de taux de fuite Dans ce cas, les douze dernières valeurs horaires des densités correspondant à trois jours d'enregistrements sont stockées en mémoire. Leur traitement ultérieur permet d'estimer la fiabilité des mesures effectuées durant chaque heure.

Si après trois jours aucune alarme n'a été générée les densités moyennes horaire sont effacées et seule la densité journalière est stockée en mémoire.

## Revendications

1. Méthode pour surveiller un taux de fuite (τ) d'une enveloppe (3) d'un appareillage électrique à haute tension (5) contenant un gaz sous pression (7), dans laquelle :
- on effectue (60) une série d'enregistrements de la densité (ρi) du gaz (7) à intervalles de temps réguliers à l'aide d'un capteur (1) de pression (P) à compensation en température (T),
- on traite (62) par tranches de temps les enregistrements de la densité (ρi) du gaz, chaque tranche de temps conduisant à une valeur moyenne (ρ_{H}) de la densité du gaz (7),
- on traite (63) les valeurs moyennes (ρ_{H}) obtenues à l'issue de chaque tranche de temps pour donner une valeur moyenne (ρτ) de la densité du gaz à l'issue d'une période de tranches de temps,
**caractérisée en ce que** le capteur de pression à compensation de température est fixé sur l'enveloppe (3) par l'extérieur et communique avec le gaz par l'intermédiaire d'un conduit (9) formé dans l'épaisseur de l'enveloppe (3) et **en ce que** :
- ladite série d'enregistrements de la densité du gaz est effectuée pendant une période nocturne,
- lesdites tranches de temps sont des tranches horaires de ladite période nocturne,
- ladite période de tranches de temps correspond à la période nocturne au cours de laquelle est effectuée ladite série d'enregistrements de la densité du gaz,
- on détermine (64) un taux de fuite (τ) de l'enveloppe (3) par différence entre densités moyennes (ρτ) obtenues à l'issue de deux périodes nocturnes différentes.

2. La méthode selon la revendication 1, dans laquelle une alarme horaire est générée par un dispositif d'alarme (A) si à deux reprises successives au cours d'une période nocturne, une variation entre densités moyennes (ρ_{H}) obtenues à l'issue de deux tranches horaires successives, excède (61) un seuil (S) de taux de fuite.

3. La méthode selon les revendications 1 ou 2, dans laquelle un taux de fuite (τ) annuel de l'enveloppe (3) est déterminé (64) par différence entre les densités moyennes (ρ_{J}, ρ_{J+365}) obtenues à l'issue de deux périodes nocturnes séparées entre elles d'une année.

4. La méthode selon la revendication 3, dans laquelle les périodes nocturnes s'étendent de 0 heure à 4 heures du matin.

## Claims

1. A method of monitoring the leakage rate (τ) from the envelope (3) of a high voltage electrical apparatus (5) containing a gas under pressure (7), in which method:
a series of recordings of the density (ρᵢ) of the gas (7) is made (60) at regular time intervals by means of a temperature-compensated pressure sensor (1);
the density recordings (ρᵢ) of the gas are processed (62) in time intervals, each time interval giving rise to a mean value over time (ρ_{H}) for the density of the gas (7); and
the mean values over time (ρ_{H}) obtained at the end of each time interval are processed (63) to give a mean value over time (ρ_{D}) for the density of the gas at the end of a period of time intervals, and
the method being **characterized in that** the temperature-compensated pressure sensor is fixed on the outside of the envelope and communicates with the gas via a duct formed through the thickness of the envelope, and **in that**:
said series of recordings of the density of the gas is made during a nighttime period;
said time intervals are hourly intervals of said nighttime period;
said period of time intervals corresponds to the nighttime period during which said series of recordings of the density of the gas is made; and
the leakage rate (τ) from the envelope (3) is determined (64) by taking the difference between mean densities (ρ_{D}) obtained at the ends of two different nighttime periods.

2. A method according to claim 1, in which an hourly alarm is generated by an alarm device (A) if on two successive occasions during a nighttime period, the variation between mean hourly densities (ρ_{H}) obtained at the ends of two successive hourly intervals both exceed (61) a leakage rate threshold (S).

3. A method according to claim 1 or 2, in which an annular leakage rate (τ) from the envelope (3) is determined (64) by taking the difference between the mean daily densities (ρ_{D}, ρ_{D+365}) obtained at the ends of two nighttime periods that are spaced apart by one year.

4. A method according to claim 3, in which the nighttime periods extend from midnight to 4:00 AM.

## Patentansprüche

1. Verfahren zur Überwachung einer Leckrate (τ) einer Verkapselung (3) eines elektrischen Hochspannungsschaltgerätes (5), das ein Gas unter Druck (7) enthält, wobei:
- (60) eine Serie von Aufzeichnungen der Dichte (ρi) des Gases (7) in regelmäßigen Zeitintervallen mit einem Druck(P)-Sensor (1) mit Temperatur(T)-Kompensation durchgeführt wird,
- (62) die Aufzeichnungen der Dichte (ρi) des Gases in Zeitabschnitten verarbeitet werden, wobei jeder Zeitabschnitt einen Mittelwert (ρ_{H}) der Dichte des Gases (7) ergibt,
- (63) die Mittelwerte (ρ_{H}), die am Ende von jedem Zeitabschnitt erhalten werden, unter Angabe eines Mittelwerts (ρ_{τ}) der Dichte des Gases am Ende eines Zeitraums von Zeitabschnitten verarbeitet werden,
**dadurch gekennzeichnet, daß** der Drucksensor mit Temperaturkompensation an der Verkapselung (3) von außen befestigt wird und mit dem Gas über eine in der Dicke der Verkapselung (3) ausgebildete Leitung (9) in Verbindung steht, und dadurch, daß:
- die Serie von Aufzeichnungen der Dichte des Gases während eines nächtlichen Zeitraums durchgeführt wird,
- die Zeitabschnitte stündliche Abschnitte des nächtlichen Zeitraumes sind,
- der Zeitraum von Zeitabschnitten dem nächtlichen Zeitraum entspricht, während dessen die Serie von Aufzeichnungen der Dichte des Gases durchgeführt wird,
- (64) eine Leckrate (τ) der Verkapselung (3) durch den Unterschied zwischen den am Ende von zwei verschiedenen nächtlichen Zeiträumen erhaltenen mittleren Dichten (ρτ) bestimmt wird.

2. Verfahren nach Anspruch 1, wobei ein stündlicher Alarm durch eine Alarmvorrichtung (A) erzeugt wird, wenn bei zwei aufeinanderfolgenden Wiederholungen während eines nächtlichen Zeitraums eine Schwankung zwischen den am Ende von zwei stündlichen aufeinanderfolgenden Zeitabschnitten erhaltenen mittleren Dichten (ρ_{H}) einen Schwellwert(S) der Leckrate übersteigt.

3. Verfahren nach den Ansprüchen 1 oder 2, wobei eine jährliche Leckrate (τ) der Verkapselung (3) durch den Unterschied zwischen den mittleren Dichten (ρ_{J}, ρ_{J+365}), die am Ende von zwei 1 Jahr auseinanderliegenden nächtlichen Zeiträumen erhalten werden, bestimmt wird (64).

4. Verfahren nach Anspruch 3, wobei sich die nächtlichen Zeiträume von 0.00 Uhr bis 4.00 Uhr morgens erstrecken.
